**Europäisches Patentamt**

**European Patent Office**

**Office européen des brevets**

(19)

(11) **EP 1 340 926 A2**

(12) **EUROPÄISCHE PATENTANMELDUNG**

| | |
|---|---|
| (43) Veröffentlichungstag:<br>**03.09.2003 Patentblatt 2003/36** | (51) Int Cl.⁷: **F16D 66/02** |

(21) Anmeldenummer: **02028688.6**

(22) Anmeldetag: **21.12.2002**

(84) Benannte Vertragsstaaten:
**AT BE BG CH CY CZ DE DK EE ES FI FR GB GR IE IT LI LU MC NL PT SE SI SK TR**
Benannte Erstreckungsstaaten:
**AL LT LV MK RO**

(30) Priorität: **28.02.2002 DE 10208961**
**07.06.2002 DE 20208841 U**

(71) Anmelder: **AUDI AG**
**85045 Ingolstadt (DE)**

(72) Erfinder:
• **Beste, Andreas**
**85080 Gaimersheim (DE)**

• **Delucchi, Giorgio**
**74906 Bad Rappenau (DE)**
• **Faulbacher, Michael**
**86163 Augsburg (DE)**
• **Brunner, Stefan**
**85092 Kösching (DE)**

(74) Vertreter: **Thielmann, Frank**
**AUDI AG,**
**Patentabteilung**
**85045 Ingolstadt (DE)**

(54) **Eigenschaftsveränderungs- und/oder Verschleisserkennung bei Kraftfahrzeugen**

(57) Die Eigenschaftsveränderungs- und/oder Verschleißerkennung von Komponenten eines Kraftfahrzeugs soll ohne größeren Aufwand verbessert werden. Hierzu wird vorgeschlagen eine Vorrichtung zur Eigenschaftsveränderungsund/oder Verschleißerkennung an Komponenten eines Fahrzeugs mit einer Sensorikeinrichtung, die mindestens einen Sensor umfasst, zur Erfassung mehrerer Messgrößen bezüglich des Fahrzeugs und/oder der Komponenten des Fahrzeugs und einer Datenverarbeitungseinrichtung zur Verarbeitung der mehreren Messgrößen. Mit der Datenverarbeitungseinrichtung wird aus mindestens einer der mehreren Messgrößen, von denen keine ein direktes Maß für die Eigenschaftsveränderung oder den Verschleiß einer der Komponeneten darstellt, für eine der Komponenten ein Eigenschafts- und/oder Verschleißmaß berechnet. Somit ist keine zusätzliche Sensorik für die erweiterte Eigenschaftsveränderungs- und/oder Verschleißerkennung notwendig.

Fig. 1

CAN,MOST,LIN,TTP...

EP 1 340 926 A2

**Beschreibung**

Die vorliegende Erfindung betrifft ein Verfahren und eine Vorrichtung zur Eigenschaftsveränderung an Komponenten eines Fahrzeugs mit einer Sensorikeinrichtungs- und/oder Verschleißerkennung, die mindestens einen Sensor umfasst, zur Erfassung mehrerer Messgrößen bezüglich des Fahrzeugs und/oder der Komponenten des Fahrzeugs und einer Datenverarbeitungseinrichtung zur Verarbeitung der mehreren Messgrößen. Insbesondere betrifft die vorliegende Erfindung eine Vorrichtung und ein Verfahren zur Bremsbelagsverschleißerkennung bei Kraftfahrzeugen.

Verschleißerkennung wird in Kraftfahrzeugen üblicherweise durch den Einbau entsprechender Sensorik realisiert. Die Sensoren haben dabei die Aufgabe vor Ort den Verschleiß eines Bauteils oder den Verbrauch einer Flüssigkeit ausreichend genau zu messen und den erfassten Wert an ein elektronisches Steuergerät zur Auswertung weiterzuleiten. Hinsichtlich des Verschleißes von Bremsbelägen gibt es derzeit zwei übliche Verfahren, den Kunden vor Folgeschäden zu bewahren. Eine erste Methode basiert auf festen Inspektionsintervallen. Dabei wird beispielsweise alle 40.000 km die Restdicke des Bremsbelags durch eine Sichtkontrolle überprüft. Belagsdicken unter 3 mm werden als untere Verschleißgrenze behandelt. Diese Methode hat den Nachteil, dass sie nicht auf die individuelle Fahrweise der Kunden beziehungsweise auf die sich ändernden Fahrbedingungen eingeht. Um alle Kunden von möglichen Folgeschäden zu schützen, ist es notwendig, die Inspektionsintervalle so zu verkürzen, dass auch Kunden mit einem erhöhten Bremsverschleiß von der Maßnahme abgedeckt werden. Diese Methode ist besonders nachteilig bei Komponenten, bei denen keine Sichtkontrolle möglich ist. Ein Beispiel hierfür ist der Zahnriemen, der in festen Intervallen ausgetauscht werden muss, unabhängig davon, in welchem Zustand er sich befindet.

Eine zweite gängige Möglichkeit zur Kontrolle des Verschleißes von Bremsbelägen ist eine individuelle, kundengerechte Lösung, bei der die Dicke der Bremsbeläge absolut gemessen wird. Dazu sind zusätzliche Sensoren erforderlich, die heutzutage mittels Kontaktfühler umgesetzt sind. Diese Fühler wirken aber nur im Endstadium der Lebensdauer des Belags und ermöglichen keine Aussage über den aktuellen Verschleißzustand, da sie als Digitalschalter wirken. Werden hochwertige Sensoren implementiert, beispielsweise für die optische Messung der Restbelagsdicke, sind genaue Aussagen über den Verschleißzustand möglich. Darüber hinaus könnten Vorhersagen über die Restlebensdauer unter Berücksichtigung der Fahrgewohnheiten durch diese direkte Messung getroffen werden.

Nachteilig wirkt in jedem Fall, dass der Einbau der Sensorik kostspielig und meist sehr aufwändig ist. Darüber hinaus stehen den Systemen zur Auswertung nur wenig Daten und vielfach in unzureichender Qualität zur Verfügung.

Die Aufgabe der vorliegenden Erfindung besteht somit darin, eine Eigenschaftsveränderungs- und/oder eine Verschleißerkennung bei Kraftfahrzeugen zu verbessern beziehungsweise zu vereinfachen.

Erfindungsgemäß wird diese Aufgabe gelöst durch eine Vorrichtung zur Eigenschaftsveränderungs- und/oder Verschleißerkennung an Fahrzeugen mit einer Signalverarbeitungseinrichtung zur Aufnahme mindestens eines Sensorsignals und zur Ausgabe einer Eigenschafts- und/oder Verschleißgröße bezüglich eines Fahrzeugteils auf der Grundlage des mindestens einen Sensorsignals, wobei über die Eigenschaftsveränderungs- und/oder Verschleißgröße kein unmittelbares Sensorsignal verfügbar ist, und die Eigenschaftsund/oder Verschleißgröße anhand des mindestens einen Sensorsignals mittels mindestens einer Übertragungsfunktion indirekt ermittelbar ist.

Vorteilhafte Weiterbildungen der Erfindung ergeben sich aus den Unteransprüchen. Grundsätzlich liegt der vorliegenden Erfindung der Gedanke zugrunde, die zur Eigenschaftsveränderung bzw. Verschleißerkennung notwendigen Vernetzungsdaten aus einem oder verschiedenen Datennetzen (CAN, MOST, LIN) einem im Fahrzeug vorhandenen zentralen Diagnose-Rechner in ausreichender Qualität und Quantität zur Verfügung zu stellen. Die Daten sind Eingangssignale einer oder mehrerer spezieller Übertragungsfunktionen zur Eigenschaftsveränderungs- und/oder Verschleißerkennung (Eigenschaftsveränderungs-Nerschleiß-Algorithmen). Das Ausgangssignal der Übertragungsfunktion ermöglicht dann genaue Rückschlüsse auf die Eigenschaftsveränderungs-Nerschleißsituation eines Bauteils.

Speziell zur Bremsbelagsverschleißerkennung bietet sich die Möglichkeit zur Aufzeichnung geeigneter Fahrzeug-Manöverdaten (CAN-Daten) in dem zentralen Diagnose-System des Fahrzeugs. Ein entsprechender Algorithmus berechnet "on-line" und nach jedem Manöver die aktuelle Verschleißenergie der Bremsklötze und vergleicht diese mit der gesamten Belagsenergie im ursprünglichen Zustand. Das Verhältnis aus beiden Energien ergibt den relativen Bremsbelagsverschleiß.

Der Vorteil der Eigenschaftsveränderungs-/ Verschleißerkennung aus den ohnehin vorhandenen Vernetzungsdaten ist darin zu sehen, dass der Einbau zusätzlicher Sensorik entfallen kann, da der Informationsgehalt der Vernetzungsdaten ausreicht, um vom realen Kundenfahrverhalten indirekt Rückschlüsse auf die Eigenschaftsveränderungs-Nerschleißsituation der Bauteile zu ziehen.

Speziell hinsichtlich der Bremsbelagsverschleißerkennung kann eine modellbasierte Diagnose zur Anwendung kommen. Ein derartiges Modell zur Bremsbelagsverschleißerkennung ermittelt in einem zentralen Diagnose-System den aktuellen Verschleiß der Bremsbeläge, wobei auch hier der Informationsgehalt der Vernetzungsdaten zur Ermittlung ausreicht. Hierfür werden alle relevanten Fahrzeug- und Manöverdaten von einem Datenbus zyklisch in einer Datei aufgezeichnet und ausgewertet. Dieses Verfahren ermöglicht eine effiziente Diagnose und hilft dem Kunden, Analyse- beziehungsweise Reparaturkosten zu sparen.

Die vorliegende Erfindung wird nun anhand der beigefügten Zeichnungen näher erläutert, in denen zeigen:

Figur 1    eine Skizze zur Gewinnung von Vernetzungsdaten in einem Kraftfahrzeug; und

Figur 2    ein Datenflussdiagramm zur Berechnung einer Verschleißgröße.

Die nachfolgend beschriebenen Ausführungsformen stellen bevorzugte Ausführungsformen der vorliegenden Erfindung dar. Hierbei kann der Begriff "Verschleiß" den Begriff "Eigenschaftsveränderung" mit umfassen oder dadurch ersetzt werden.

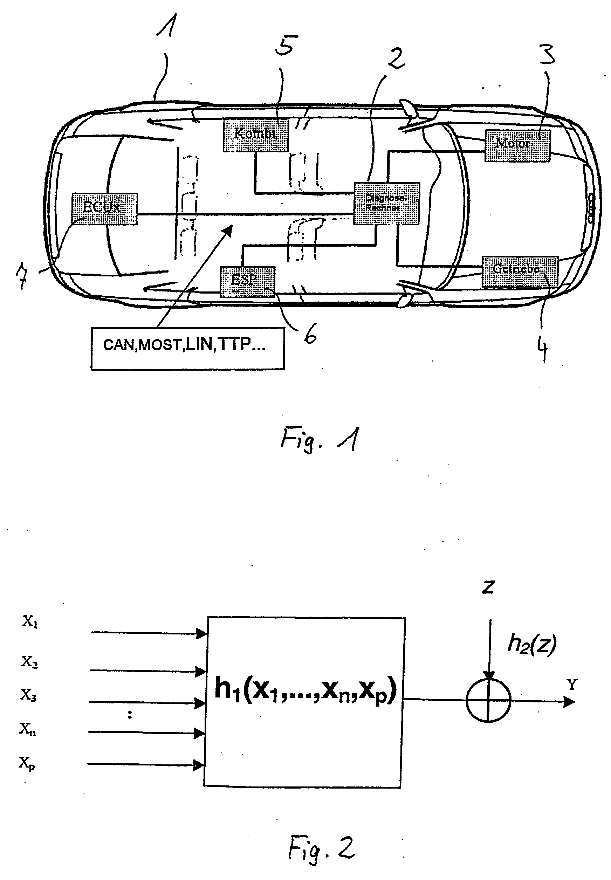

Die elektrischen Komponenten eines Kraftfahrzeugs sind in der Regel über Bussysteme datentechnisch miteinander verbunden. So zeigt Figur 1 ein Kraftfahrzeug 1, das mit einem Diagnoserechner 2 ausgestattet ist. Der Diagnoserechner 2 sammelt die über die Bussysteme CAN, MOST, LIN, TTP etc. erhaltenen Daten von Steuergeräten beziehungsweise Sensoren. Als typische Beispiele hierfür seien die Steuergeräte für den Motor 3 und das Getriebe 4 genannt. Weitere Quellen für Vernetzungsdaten sind beispielsweise die Armaturenbrettinstrumentierung (Kombi) 5, die elektronische Stabilitätssteuerung (ESP) 6 und andere beliebige Steuerungssysteme (ECUx-Elektronic Control Unit) 7.

Der zentrale Diagnoserechner 2 zeichnet die zur Eigenschaftsveränderungs-/Verschleißerkennung notwendigen Daten $X_1,...,X_n$ in einer "Manöverdatei" auf und berechnet daraus "on-line" einen Veränderungsgrad/Verschleißgrad Y des jeweiligen Bauteils. Der Eigenschaftsveränderungs-/Verschleißgrad Y als Ausgangsgröße hängt in den meisten Fällen nicht nur von den Eingangssignalen $x_1...x_n$ (direkte Eingangssignale) sondern auch von einer oder mehreren Störgrößen z (indirekte Eingangssignale) ab. Eine derartige Störgröße z ist in vielen Fällen die Temperatur, die zur Berechnung der Ausgangsgröße Y entsprechend berücksichtigt werden muss. In vorteilhafter Weise erfolgt dies dadurch, dass die Störgröße, im vorliegenden Fall die Temperatur, mittels einer eigenen Übertragungsfunktion $\vec{h}_1$ (z) für den Eigenschaftsveränderungs-/Verschleißgrad Y additiv berücksichtigt wird.

Figur 2 zeigt symbolisch den Signalfluss zur Berechnung des Verschleißgrads Y aus den Eingangssignalen $X_1$, $X_2$, $X_3$, ..., $X_n$ und $X_p$. Das Eingangssignal $X_p$ wird zur Plausibilisierung der aufgezeichneten Daten verwendet und bestätigt somit die Gültigkeit der Daten in der "Manöverdatei".

Die Genauigkeit der Verschleißerkennung ist unmittelbar von den gewählten Übertragungsfunktionen $h_1$ und $h_2$ und damit vom gewählten technischen Ansatz abhängig. So können in das gewählte Modell Größen wie beispielsweise die Energie, Kräfte etc. Eingang finden. Dabei unterscheidet man globale und lokale Ansätze.

Die in Figur 2 dargestellten Funktionen zur Berechnung des Verschleißgrads Y lassen sich wie folgt auch in vektorieller Schreibweise formulieren.

$$Y = \vec{h}_1{}^T (x_{1...n}, X_p) \cdot \vec{x} + \vec{h}_2{}^T(z) \cdot \vec{z}$$

Dabei stellt der Verschleißgrad Y die Summe aus dem Skalarprodukt aus der als Zeilenvektor formulierten Übertragungsfunktion $\vec{h}_1{}^T$ mit dem als Spaltenvektor formulierten Eingangssignal $\vec{x}$ sowie dem Skalarprodukt aus der als Zeilenvektor formulierten Übertragungsfunktion $\vec{h}_2{}^T$ mit der Störgröße z als Spaltenvektor dar. Vergleicht man den Verschleißgrad Y mit einem konstanten Referenzwert R ergibt sich ein Verschleißmaß M zu $M = \frac{Y}{R}$. Somit lässt sich beispielsweise der Verschleiß eines Bremsbelags oder eines Kupplungsbelags auf der Basis von Eingangssignalen ermitteln, die keinen unmittelbaren Bezug zu den aktuellen Belagsdicken besitzen.

Speziell im Hinblick auf den Verschleiß von Bremsbelägen kann der Verschleiß aus Geschwindigkeitssignalen und dergleichen als Eingangsgröße mit einer geeigneten Übertragungsfunktion berechnet werden. Hierzu wird die Bremsverteilung zwischen Vorder- und Hinterachse durch die Elektronische Bremskraft (EBV), die in die ESP als Funktion integriert ist, als eine Eingangsgröße erfaßt. Ferner geht man davon aus, dass die Bremsanlage unter Normalbedingungen aufgrund der vorgegebenen Belagsdicke eine bestimmte Bremsenergie aufbringen kann. Bei jedem Bremsvorgang wird ein Anteil dieser Energie verbraucht. Die Energie jedes Bremsmanövers $E_{Bremsmanöver}$ wird festgehalten und addiert, so dass man permanent Kenntnis darüber hat, welche Bremsenergie $E_{Bremse-ist}$ vom Fahrzeug bislang geleistet worden ist.

$$E_{Bremse-ist} = \Sigma\, {}^{E}Bremsmanöver$$

Der aktuelle Verschleiß ergibt sich aus dem Quotienten von $E_{Breme-ist}$ und $E_{Bremse-theoretisch}$, wobei $E_{Bremse-theoretisch}$ den Gesamtenergiebetrag einer neuwertigen Bremsanlage darstellt.

$$M \text{ in } [\%] = \frac{E_{Bremse-ist}}{E_{Bremse-theoretisch}} \cdot 100$$

Zur Berechnung des Verschleißmaßes M bedarf es somit noch der exakten Auswertung eines jeden einzelnen Bremsmanövers. Dazu wird zunächst die theoretische Bremsenergie $E_{Bremse-theoretisch}$ eines einzelnen Bremsmanövers vom Beginn der Bremsung bis zu deren Ende wie folgt berechnet:

$$E_{Bremsmanöver-theoretisch} = \frac{1}{2} \cdot m \cdot (V_1^2 - V_2^2)$$

Diese theoretische Bremsenergie stellt somit die kinetische Energiedifferenz des Kraftfahrzeugs dar, wobei m der Masse des Kraftfahrzeugs, $v_1$ der Geschwindigkeit des Kraftfahrzeugs zu Beginn des Bremsvorgangs und $V_2$ der Geschwindigkeit des Kraftfahrzeugs am Ende des Bremsvorgangs entspricht. Diese theoretische Bremsenergie eines Bremsmanövers muss anhand von Korrekturfaktoren den tatsächlichen Umgebungsbedingungen wie Berg-auf/ab-fahrt, Temperaturzustand der Bremse, Beladungszustand usw., angepasst werden. Dies erfolgt durch eine Multiplikationskonstante k.

$$E_{Bremsmanöver} = k \cdot E_{Bremsmanöver-theoretisch}$$

mit

$$k = f(P_{Bremse}, T_{Bremse}, Beladung, ...)$$

Alternativ zu dieser dargestellten Methode kann der Ansatz ebenso anhand der verrichteten Arbeit aufgestellt werden. Diese Alternative hätte den Vorteil, dass man über den vorhandenen Bremsdruck $p_{Bremse}$ sehr genau über die Bremsanlagengeometrie die Bremskraft ermitteln kann und anhand eines Korrelationsfaktors und der Winkelbewegung der Bremsscheibe die Arbeit berechnen kann.

In jedem Fall ist das Verschleißmaß M, das sich aus dem Energie- oder Arbeitsansatz ergibt, allenfalls eine Nährungsgröße für den tatsächlichen Verschleiß der Bremsanlage. Es ist jedoch ein sehr guter Anhaltspunkt, der von der Qualität der Aussage zwischen der Methode der unmittelbaren Belagsmessung und der Methode der rein zeitlichen Vorhersage liegt. Insbesondere wird durch das erfindungsgemäße Verfahren die individuelle Fahrweise und der individuelle Einsatz eines einzelnen Fahrzeugs berücksichtigt, um den Zustand der jeweiligen Komponente zu ermitteln.

Ein weiterer Anwendungsbereich zur Ermittlung eines Verschleißes oder Eigenschaftsveränderung aus einer Manöverdatei wäre beispielsweise die Abnutzung/Alterung von Reifen, des Zahnriemens, die Kunststoffalterung, die Kühlerverschlammung, die Gummilager, die Stoßdämpfer, die Betriebsstoffe, die Lager etc.

**Patentansprüche**

1. Vorrichtung zur Eigenschaftsveränderungs- und/ oder Verschleißerkennung an Fahrzeugen mit

   einer Signalverarbeitungseinrichtung zur Aufnahme mindestens eines Sensorsignals und zur Ausgabe einer Eigenschafts- und/oder Verschleißgröße bezüglich eines Fahrzeugteils auf der Grundlage des mindestens einen Sensorsignals,

   **dadurch gekennzeichnet, dass**

   über die Eigenschafts- und/oder Verschleißgröße kein unmittelbares Sensorsignal verfügbar ist, und die Eigenschafts- und/ oder Verschleißgröße anhand des mindestens einen Sensorsignals mittels mindestens einer Übertragungsfunktion indirekt ermittelbar ist.

2. Vorrichtung nach Anspruch 1, die mit einem Busanschluss, insbesondere für einen CAN-Bus ausgestattet ist.

3. Vorrichtung nach Anspruch 1 oder 2, wobei die Messgrößen Vernetzungsdaten sind, die über einen Bus von den Sensoren erfassbar sind.

4. Vorrichtung nach einem der Ansprüche 1 bis 3, wobei das Eigenschaftsund/oder Verschleißmaß Y durch eine Übertragungsfunktion $h_1$ mit den Eingangsgrößen $X_1, ...X_n$ berechenbar ist.

5. Vorrichtung nach einem der Ansprüche 1 bis 4, wobei eine Messgröße eine Störgröße wie beispielsweise die Temperatur ist.

6. Vorrichtung nach Anspruch 5, wobei die Temperatur mit einer eigenen Übertragungsfunktion $h_2$ zur Berechnung des Eigenschafts- und/oder Verschleißmaßes Y berücksichtigbar ist.

7. Vorrichtung nach einem der Ansprüche 4 bis 6, wobei neben den Messgrößen ein Plausibilisierungssignal, das zur Überprüfung der Messgrößen dient, als Eingangsgröße für die Übertragungsfunktion $h_1$ verwendbar ist.

8. Vorrichtung nach einem der Ansprüche 1 bis 7, wobei die Messgrößen zyklisch in einer Datei zur Auswertung aufzeichenbar sind.

9. Verfahren zur Eigenschaftsveränderungs- und/ oder Verschleißerkennung an Komponenten eines Fahrzeugs durch

   Erfassen mehrerer Messgrößen bezüglich des Fahrzeugs und/oder der Komponenten des Fahrzeugs und

Verarbeiten der mehreren Messgrößen,

**dadurch gekennzeichnet, dass**

das Verarbeiten ein Berechnen eines Eigenschaftsveränderungsund/oder Verschleißmaßes für eine der Komponenten aus mindestens einer der mehreren Messgrößen, von denen keine ein direktes Maß für die Eigenschaftsveränderung und/oder den Verschleiß der Komponente darstellt, umfasst.

10. Verfahren nach Anspruch 9, wobei die Messgrößen als Vernetzungsdaten über ein Bussystem, insbesondere einen CAN-Bus, gewonnen werden.

11. Verfahren nach Anspruch 9 oder 10, wobei das Eigenschaftsveränderungs- und/oder Verschleißmaß Y durch eine Übertragungsfunktion $h_1$ mit den Eingangsgrößen $X_1,...X_n$ berechnet wird.

12. Verfahren nach einem der Ansprüche 9 bis 11, wobei eine der Messgrößen eine Störgröße wie beispielsweise die Temperatur darstellt.

13. Verfahren nach Anspruch 12, wobei die Temperatur mit einer eigenen Übertragungsfunktion $h_2$ zur Berechnung des Eigenschaftsveränderungsund/oder Verschleißmaßes berücksichtigt wird.

14. Verfahren nach einem der Ansprüche 11 bis 13, wobei neben den Messgrößen ein Plausibilisierungssignal, das zur Überprüfung der Messgrößen dient, als Eingangsgröße für die Übertragungsfunktion $h_1$ verwendet wird.

15. Verfahren nach einem der Ansprüche 9 bis 14, wobei die Messgrößen zyklisch in einer Datei zur Auswertung aufgezeichnet werden.

16. Verfahren nach einem der Ansprüche 9 bis 15, wobei ein Bremsbelagverschleiß aus einer Relation aus einer Summe von Bremsenergien mehrerer Bremsmanöver zu einer Gesamtbelagsenergie ermittelt wird.

17. Verfahren nach Anspruch 16, wobei die Bremsenergie für ein Bremsmanöver aus der theoretischen kinetischen Energiedifferenz des Fahrzeugs beim Bremsmanöver ermittelt wird.

Fig. 1

Fig. 2